# EUROPEAN PATENT APPLICATION

(11) **EP 1 958 916 A1**
(43) Date of publication of application: **20.08.2008**
(21) Application number: 08101708.9
(22) Date of filing: 18.02.2008
(51) Int. Cl.: B66C 23/68, B60P 1/54, B25J 9/06

(54) **An articulated arm for moving objects**

(30) Priority: 16.02.2007 IT RE20070020
(71) Applicant: GP -s.r.l., 42019 Scandiano (RE) (IT)
(72) Inventor: Lanzotti, Gianni GP - S.R.L., 42019 Scandiano (Reggio Emilia) (IT)
(74) Representative: Corradini, Corrado

(57) **Abstract**

An articulated arm for moving objects, typically for moving heavy loads, comprising a first rigid element (2) destined to be fixed to a support structure (101), a second rigid element (3) hinged to the first rigid element (2) according to a predetermined first hinge axis (X), a third rigid element (5) hinged to the second rigid element (3) according to a second hinge axis (Y) which is perpendicular to the first hinge axis (X), and a fourth rigid element (7) hinged to the third rigid element (5) at a third hinge axis (Z) which is perpendicular to both the first hinge axis (X) and the second hinge axis (Y); the articulated arm further comprising means for activating (4, 6, 50, 72) which rotate each of the rigid elements (2, 3, 5, 7) with respect to an adjacent element of the rigid elements (2, 3, 5, 7), according to a relative hinge axis (X, Y, Z), and a gripping organ (8), installed on-board the fourth rigid element (7), which gripping organ (8) grips and solidly retains the loads to be transported.

## Description

The invention relates in general to an articulated arm for moving objects, typically for moving heavy weights such as, for example, building materials in construction sites.

More especially, the invention relates to an articulated arm destined to be installed on board cranes which are commonly used in this type of operation.

As is known, a crane is a machine for raising and moving loads, which generally comprises a rigid support frame to which a large and strong mobile arm is associated, at an end of which a pulley is installed, provided with means for hooking the loads.

The support frame can be installed in a fixed position in the work area, or can be installed on a wheeled vehicle (a mobile crane) which enables the crane to be moved from one workplace to another.

The mobile arm is generally extensible and can be articulated to the relative support frame in such as way as to rotate about a vertical axis, in order to move the loads in a horizontal and/or in order to rotate about a horizontal axis, to raise and lower loads from and to the ground.

A drawback of known-type cranes is however that the transported loads, though being movable from one point to another and raised/lowered from and to the ground, cannot be positioned in space.

Thus, when a load must be positioned, for example with respect to other loads in the work area, the operators have to move the load manually while it is suspended from the pulley, with consequent safety problems as well as with obvious difficulties for reaching the correct position.

A further drawback is that known-type cranes can support the loads only from above, and are therefore not able to move them while supporting them from below, for example in order to position them in contact with and below existing horizontal planes.

The last of the above drawbacks is particularly felt, for example when it is necessary to position a structural element, such as a support beam, below a horizontal plane defining a floor of a building.

The aim of the present invention is to provide a device for moving objects, typically for moving heavy loads, which obviates the above-described drawbacks in the prior art and which can be easily installed on board the mobile arm of a crane.

A further aim of the invention is to attain the above-mentioned objective in the ambit of a simple, rational and inexpensive solution.

These aims are attained by the invention as it is characterised in the independent claim. The dependent claims delineate preferred embodiments of the invention.

In particular, the invention makes available an articulated arm comprising a first rigid element destined to be fixed to a support structure, for example to the mobile arm of a crane, a second rigid element hinged to the first rigid element at a first predetermined hinge axis, a third rigid element articulated to the second rigid element at a second hinge axis, perpendicular to the first hinge axis, and a fourth rigid element articulated to the third rigid element at a third hinge axis which is perpendicular to both the first and the second hinge axes.

The articulated arm further comprises means for activating for rotating each of the rigid elements with respect to the adjacent rigid element, according to the relative hinge axis, and a gripping organ installed on-board the fourth rigid element, which grips and solidly retrains the loads to be transported.

Thanks to this solution, the gripping organ located at the end of the articulated arm has three degrees of rotational freedom, and is therefore able to position the transported loads in any orientation in space.

Further, the gripping organ can easily be positioned such as to support the transported loads from below, enabling, for example, the loads to be positioned in contact with and below existing planes or horizontal surfaces.

Further characteristics and advantages of the present invention will better emerge from a reading of the following description, provided by way of nonlimiting example with the aid of the figures of the drawings, in which:
- Figure 1 is a lateral view of an articulated arm of the invention;
- Figure 2 is a plan view of the articulated arm of figure 1;
- Figure 3 is figure 1, shown while the articulated arm is in a possible work configuration;
- Figure 4 is figure 2, shown while the articulated arm is in a possible work configuration;
- Figure 5 is the arm of figure 1 installed on-board a mobile crane.

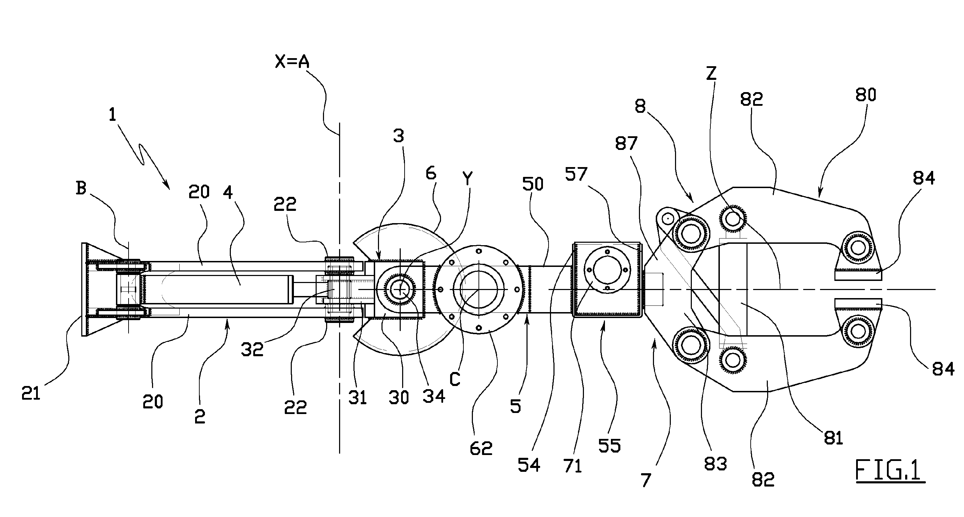

As illustrated in figure 1, the articulated arm 1 comprises a first rigid element 2, of a generally elongate shape, which is formed by two identical lateral plates 20, opposite and reciprocally separated by a space.

A flat connecting flange 21 is fixed to a first end of the first rigid element 2, preferably by welding; the arm 1, by means of the flange 21, can be fixed to a support structure.

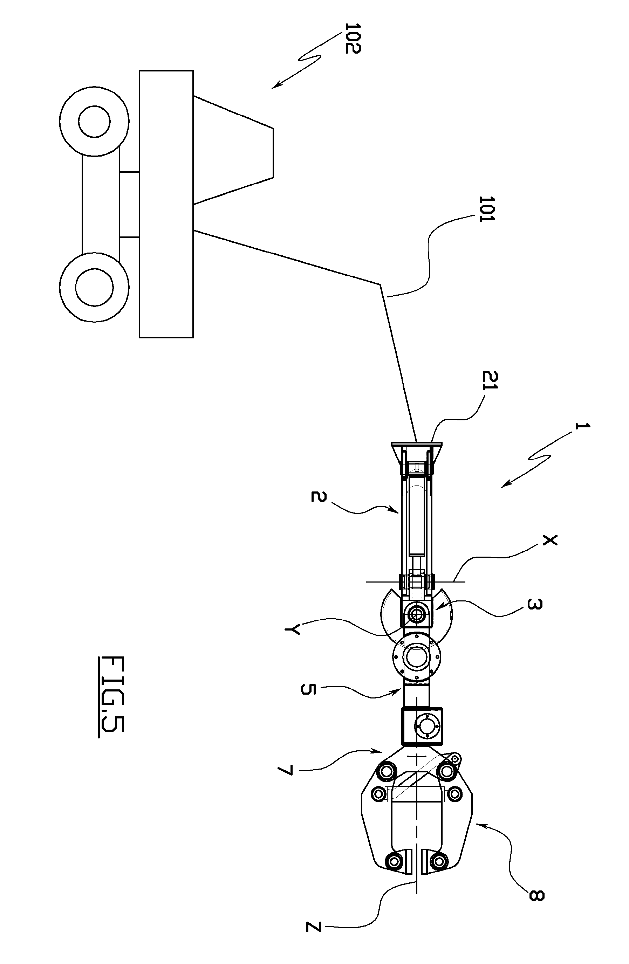

In the example schematically represented in figure 5, the connecting flange 21 is fixed, preferably dismountably, for example by bolts, to an end of the mobile arm 101 of a mobile crane 102. However, the connecting flange 21 could be installed on a fixed support structure in the work zone, for example to a sturdy fixed wall.

The flat connecting flange 21 could also be replaced by any other connecting element suitable for realising a coupling between the articulated arm 1 and the relative support structure.

A second rigid element 3 is hinged to the opposite end of the first rigid element 2, the second rigid element being able to rotate with respect to the first rigid element 2 about a first articulation axis X which is perpendicular to the lateral plates 20.

In particular, the second rigid element 3 comprises two substantially rectangular plates, respectively a front plate 30 and a back plate 31, which are perpendicular to one another and which are reciprocally connected to one another at ends thereof.

The back plate 31 is inserted into the space between the lateral plates 20 of the first rigid element 2 and is provided with a through-hole internally of which a hinge pivot 32 is inserted, positioned according to the first hinge axis X.

The ends of the hinge pivot 32, which project from the opposite surfaces of the back plate 31, are inserted into two hollow bushes 22, each of which is welded to the inside of a through-hole afforded in a respective lateral plate 20 of the first rigid element 2.

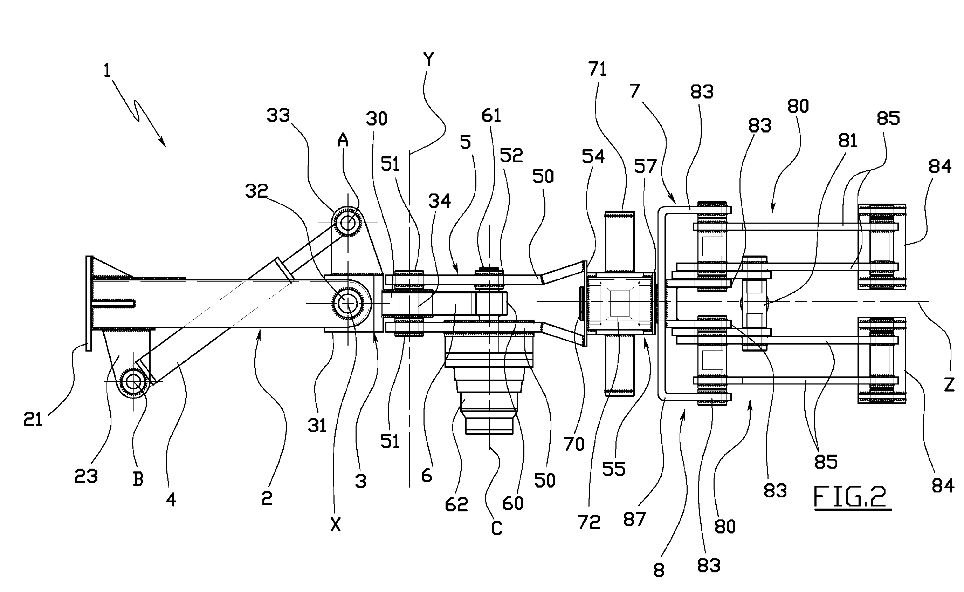

As illustrated in figure 2, two opposite support brackets 33 are welded on a flank of the back plate 31; a first end of a hydraulic jack 4 is hinged to the two opposite support brackets 33, at a hinge axis A which is parallel and eccentric to the first hinge axis X.

The second end of the hydraulic jack 4 is hinged to a pair of opposite support brackets 23, which are fixed to the first rigid element 2, at the connecting flange 21, in a hinge axis B which is parallel to the first hinge axis X.

The hydraulic jack 4 is located in the space between the lateral plates 20 of the first rigid element (see figure 1).

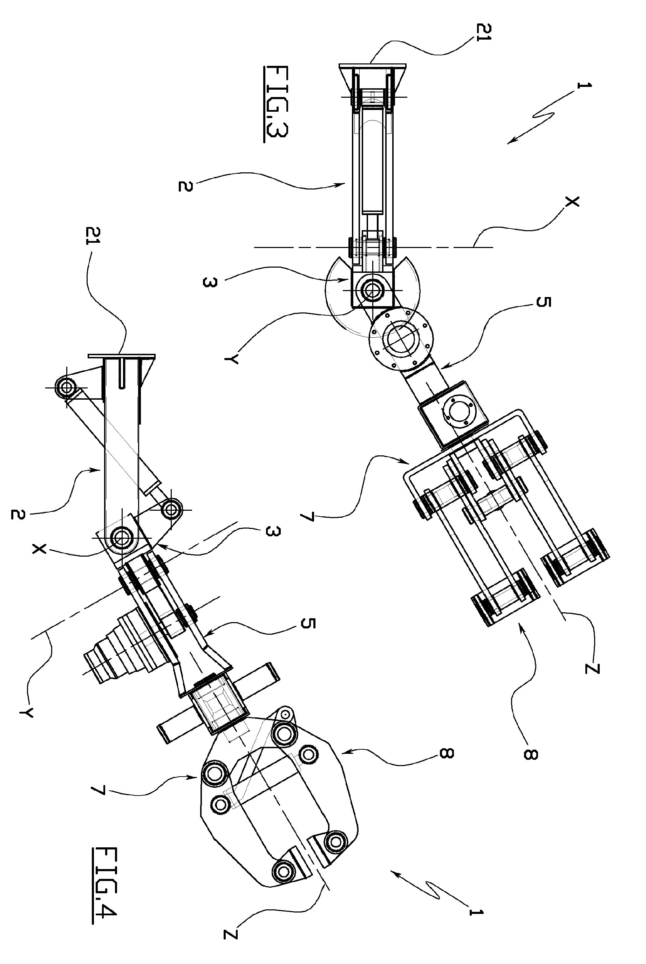

In this way, the alternating motion of the hydraulic hack 4 causes the second rigid element 3 to oscillate with respect to the first rigid element 2, rotating about the first hinge axis X (see figure 4).

As illustrated in figure 2, a third rigid element 5 is hinged to the front plate 30 of the second rigid element 3; the third rigid element 5 is generally elongate in shape, and is formed by two identically-shaped plates 50 which are opposite one another and are reciprocally separated by a space.

The third rigid element 5 is hinged to the second rigid element 3 such as to rotate about a second hinge axis Y which is perpendicularly-oriented with respect to the articulation axis X.

In particular, the front plate 30 of the second rigid element 3 is inserted in the space between the shaped plates 50 of the third rigid element 5, and is provided with a through-hole internally of which a hinge pivot 34 is inserted, the hinge pivot 34 being oriented in the direction of the second hinge axis Y.

The ends of the hinge pivot 34 which project from the opposite surfaces of the front plate 30 are inserted into two cylindrical bushes 51, each of which is welded to the inside of a through-hole afforded in a respective shaped plate 50 of the third rigid element 5.

As illustrated in figure 1, a rack 6 is also welded to the front plate 30 of the second rigid element 3. The rack 6 is shaped as a portion of a cogged crown, a centre of which coincides with the second hinge axis Y.

The rack 6 is received in the space between the shaped plates 50 of the third rigid element 5, and constantly enmeshes with a cogged pinion 60 (see figure 2), which cogged pinion 60 is keyed on a rotating shaft 61 installed on the third rigid element 5 according to a rotation axis C which is parallel to the second hinge axis Y.

The rotating shaft 61 is activated by an electric motor 62 fixed on the external flank of one of the shaped plates 50 of the third rigid element 5, and has a free end which is rotatably inserted in a cylindrical bush 52 welded in a through-hole afforded in the other shaped plate 50.

The cogged pinion 60 is keyed on a tract of the rotating shaft 61 comprised between the two shaped plates 50, such as to enmesh with the rack 6.

In this way, the rotating of the pinion 60 on the rack 6 causes the third rigid element 5 to oscillate with respect to the second rigid element 3, rotating about the second hinge axis Y (see figure 3).

As illustrated in figure 2, the shaped plates 50 of the third rigid element 5 exhibit two opposite portions which reciprocally flaringly distance, to ends of which a transversal plate 54 is welded.

A hollow casing 55 is welded to the transversal end plate 54, which hollow casing 55 has an overall box shape and comprises a substantially prismatic lateral wall, closed by a bottom wall 57 which is parallel to the transversal plate 54.

A fourth rigid element 7 is rotatably coupled to the hollow casing 55, which fourth rigid element 7 rotates about a third hinge axis Z oriented perpendicular to both the first and the second hinge axis X and Y.

The fourth rigid element 7 comprises a gripping organ, denoted overall by 8, which grips and solidly retains the loads to be transported.

As illustrated in figure 2, the gripping organ 8 comprises two distinct plier devices 80, which are identical and side-by-side, and which are simultaneously activated by a single pneumatic jack 81.

Each plier device 80 comprises a pair of jaws 82 (see figure 1), respectively an upper and a lower jaw, which near and distance from one another in order to grip or release the load.

Each jaw 82 exhibits a first end which is hinged to a pair of support tabs 83, and a second end which is hinged to a plate 84 which remains in contact with the load to be moved.

As illustrated in figure 2, each jaw 82 is formed by a pair of opposite plates 85, which are joined by cylindrical spacer bushes in which connecting pivots engage respectively with the support tabs 83 and the plate 84.

The pneumatic jack 81 is located in the space between the two plier devices 80, and exhibits a first end which is hinged to both the upper jaws 82 of the plier devices 80, and an opposite end hinged to both the lower jaws 82 (see figure 1).

As illustrated in figure 2, the support tabs 83 of the plier devices 80 are fixed to a single transversal support plate 87.

In particular, the laterally-positioned tabs 83 are made in a single piece with the support plate 87, for example by bending, while the central tabs 83 are welded thereto.

The support plate 87 is centrally welded to a shaft 70 which develops on the opposite side with respect to the support tabs 83, and a central axis of which is oriented parallel to the planes in which the reciprocal motion of the jaws 82 belonging to the plier devices 80 takes place.

The shaft 70 is rotatably coupled to the box structure 55 in such a way that the central axis thereof defines the fourth hinge axis Z.

In particular, the shaft 70 is inserted snugly in two aligned holes afforded respectively in the bottom wall 57 of the box casing 55 and in the end plate 54 of the third rigid element 5; further, the shaft 70 is axially blocked with respect to the external casing 55 by means of the transversal plate 87, which is destined to stay in contact against the bottom wall 57, and, by means of a seeger ring, to engage in a corresponding channel afforded at the end of the shaft 70, projecting from the end plate 54.

A cogged pinion 72 is keyed to the internal portion of the shaft 70, which cogged pinion 72 constantly enmeshes with an endless screw (not shown in the figures), which endless screw is oriented perpendicular with respect to the axis of the shaft 70 and which endless screw is contained internally of a guard casing 71 fixed to the external casing 55, where it is rotated by an electric motor (not illustrated).

In this way, the rotation of the endless screw enables the rotating shaft 70 and the gripping organ 8 fixed thereto to oscillate with respect to the third rigid element 5, rotating about the third hinge axis Z (see figures 3 and 4).

Thanks to the articulated arm 1 described herein, a load to be transported can easily be gripped by the plier organ 8, and oriented in any way in space, by means of reciprocal rotations of the rigid elements 2, 3, 5 and 7 with respect to the hinge axes X, Y and Z, which form a trio of Cartesian axes in space.

Obviously an expert in the sector might bring numerous modifications of a technical-applicational nature to the articulated arm 1 as described herein above, without forsaking the ambit of the invention as it is claimed herein below.

## Claims

1. An articulated arm for moving objects, typically for moving heavy loads, comprising a first rigid element (2) destined to be fixed to a support structure (101), a second rigid element (3) hinged to the first rigid element (2) by a first hinge device having a hinge axis (X) close to vertical, a third rigid element (5) hinged to the second rigid element (3) by a second hinge device having a hinge axis (Y) perpendicular to the first rotation axis (X), and a fourth rigid element (7) hinged to the third rigid element (5) by a third hinge device having a hinge axis (Z) which is perpendicular to both the first and the second hinge axes (X, Y), the articulated arm further comprising means for activating (4, 6, 50, 72) for activating the hinge devices and a gripping organ (8), installed on board the fourth rigid element (7), which gripping device (8) grips and solidly retains the loads to be transported, **characterised in that** the second device having a hinge axis exhibits a freedom of movement of more than 180°.

2. The articulated arm of claim 1, **characterised in that** the means for activating the second device having a hinge axis comprise at least a portion of cogged crown (6) fixed to the second rigid element (3), and a driven cogged pinion (60), rotatably installed on an adjacent rigid element (5), which driven cogged pinion (60) enmeshes with the at least a portion of cogged crown (6).

3. The articulated arm of claim 1, **characterised in that** the means for activating the third device having a hinge axis comprise a cogged pinion (72) fixed on a rigid element (7), and a powered endless screw, rotatingly installed on an adjacent rigid element (5), which endless screw enmeshes with the cogged pinion (72).

4. The articulated arm of claim 1, **characterised in that** the gripping organ (8) comprises at least a pliers device (80) provided with two reciprocally mobile jaws (82), which jaws (82) near and distance from one another in order to grip and release the loads to be transported.

5. The articulated arm of claim 4, **characterised in that** the reciprocal movement of the mobile jaws (82) occurs in a plane which is parallel to the third hinge axis (Z).

6. A crane for moving objects, typically for moving heavy loads, comprising a mobile arm (101) for bearing the loads, **characterised in that** an articulated arm (1) according to any one of the preceding claims is installed on the mobile arm (101).
